# EUROPÄISCHE PATENTANMELDUNG

(11) **EP 1 630 464 A2**
(43) Veröffentlichungstag der Anmeldung: **01.03.2006**
(21) Anmeldenummer: 05018438.1
(22) Anmeldetag: 24.08.2005
(51) Int. Cl.: F16L 1/028

(54) **Verfahren zum Sanieren von unter einer Strasse verlegten Zu- und Ableitungen**

(30) Priorität: 27.08.2004 DE 102004041535
(71) Anmelder: Würmseher, Hans, Dipl.-Ing., 94009 Ruhstorf (DE)
(72) Erfinder: Würmseher, Hans, Dipl.-Ing., 94009 Ruhstorf (DE)
(74) Vertreter: Strasse, Joachim

(57) **Zusammenfassung**

Die Erfindung bezieht auf ein Verfahren zum Sanieren einer üblichen Anlage von Versorgungs- und Entsorgungsleitungen unter einer horizontalen Straßendecke (10) mit einer befestigten Fahrbahn und Gehwegen (14) zu beiden Seiten der Fahrbahn mit einem Unterbau (16) sowie einem darunter verlegten Mischwasserkanal (20a) und hierzu in vorgeschrieben seitlichen Abständen verlegte Leitungen für Wasser (24), Gas (22) und gegebenenfalls Strom. Hierbei wird in Schritten vorgegangen. Alle unterhalb der Fahrbahn befindlichen Rohre und Leitungen (20, 22, 24) werden stillgelegt. Neue Leitungen werden nur unterhalb eines seitlichen Gehweges (14) übereinander mit einem oder zwei Abwasserkanalrohren (38) ganz unten, einem Wasserleitungsrohr (42) im Abstand darüber, einem Gasleitungsrohr (44) noch weiter oben und ganz oben von elektrischen Leitungen für Strom und Telekommunikation (46) verlegt. Die neuen Leitungen (32, 42, 44, 46) werden durch mehrere unterhalb des Gehweges (14) in Abständen zueinander angeordnete und von oben durch eine Abdeckung (40) zugängliche Revisionsschächte (34) geführt. Die Abstände werden gemäß dem Bedarf an gebündelten Abzweigungen in oder von Querleitungen (36) zu den einzelnen Rohren und Leitungen (32, 42, 44, 46) bestimmt. Zum Schluss erfolgt ein Anpassen der Straßendecke (10) an ein leichtes Gefälle zu der Seite des Gehweges (14) hin, unter dem sich die neu verlegten Rohre und Leitungen (32, 42, 44, 46) befinden.

## Beschreibung

Die vorliegende Erfindung bezieht sich auf ein Verfahren zum Sanieren von unter einer öffentlichen Strasse verlegten Zu- und Ableitungen zur Versorgung an der Strasse befindliche Gebäude mit Energie, wie Gas und Strom, mit Wasser und zur Entsorgung von Abwasser sowie zum Anschließen von Kommunikationsleitungen, wie Telefon, Netzwerkanschschlüsse oder TV - Kabel. Es besteht ein erheblicher Bedarf an Tiefbaumaßnahmen, um zum Teil sehr alte und auch schon verrottete Ver- und Entsorgungsleitungen unter einem Straßenprofil zu ersetzen und zu erneuern, insbesondere zu modernisieren. Im Zuge der Entwicklung sind zu den früher nur wenigen Zu- und Ableitungen heute mehr Anschlüsse, wie beispielsweise die Kommunikationsanschlüsse zu verlegen. Auch bei den Abwassern werden frühere Mischsysteme von Schmutzwasser und Regenwasser durch getrennte Leitungen ersetzt. Es gibt es zahlreiche Vorschläge zur Lösung von sich ergebenden Einzelproblemen. So beschreibt die EP 0 964 106 A1 ein Sanierungsverfahren für unbegehbare Rohre, vornehmlich Abwasserrohre, die eine Innenauskleidung erhalten sollen. Um die Schachtarbeiten zu verringern wird in der EP 0 969 155 ein Verfahren zum Auswechseln von im Erdreich verlegten Rohren vorgeschlagen. Hierbei handelt es immer nur um Einzelmaßnahmen und zumeist werden selbst für diese Einzelmaßnahmen noch umfangreiche Erdarbeiten und Straßensperren erforderlich.

Es ist Aufgabe der Erfindung ein Verfahren für eine kostengünstige und nachhaltige Sanierung und Erneuerung oder Modernisierung verfügbar zu machen.

Die Lösung dieser Aufgabe ergibt sich aus den Ansprüchen und aus der folgenden detaillierten Beschreibung. Hierbei ist im Wesentlichen die Erkenntnis aufgegriffen worden, dass nach den weiterhin bestehenden Vorschriften, zwischen den verschiedenen im Erdreich verlegten Rohren und Leitungen ein seitlicher Mindestabstand einzuhalten ist, was zwangsläufig bedingt, dass bei Reparaturen oder Nacharbeitungen eine Straße in ihrer Breite aufgerissen werden muss, wogegen keine Vorschrift besteht, die eine Übereinanderanordnung von Leitungen und Rohren nicht zulässt.

Weitere Einzelheiten, Merkmale und Vorteile ergeben sich aus der folgenden Beschreibung eines in der Zeichnung dargestellten bevorzugten Ausführungsbeispiels.

Es zeigen:
Figur 1 einen Querschnitt durch ein Straßenprofil als Ausgangssituation und
Figur 2 einen gleichen Querschnitt nach einer Sanierung gemäß der vorliegenden Erfindung.

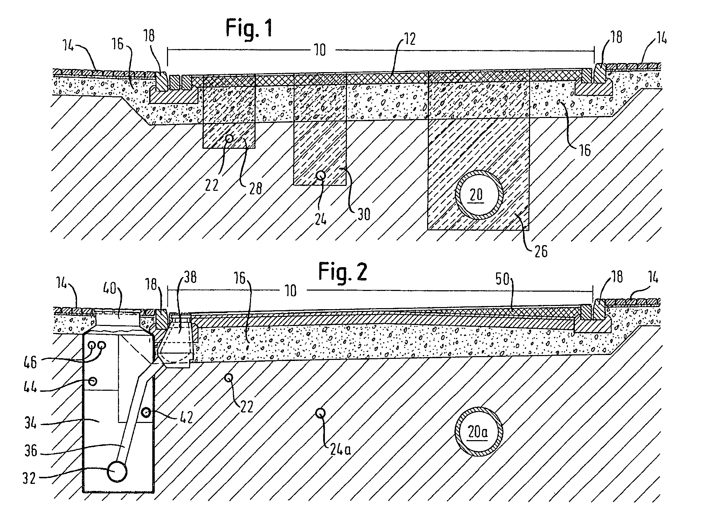

In Figur 1 ist eine Ausgangssituation einer üblichen Anlage von Versorgungs- und Entsorgungsleitungen unter einer horizontalen Straßendecke 10 mit einer befestigten Fahrbahn 12 und Gehwegen 14 zu beiden Seiten der Fahrbahn 12 dargestellt. Unter der Breite des Straßenprofils von einem zum anderen Gehweg 14 befindet sich ein Unterbau 16. Der Übergang von der Fahrbahn 10 zu den Bürgersteigen 14 wird üblicherweise von Rinnsteinen 18 gebildet, in deren Rinnen in Abständen zueinander in Figur 1 nicht eingezeichnete Gullys zur Aufnahme von Regenwasser angeordnet sind, die beiderseits mit Rohren das gesammelte Wasser zu einem Kanal, beispielsweise zu einem Mischwasserkanal 20 schräg nach unten ableiten. In diesen Kanal 20 wurden auch die Hauszuleitungen geführt.

In vorgeschriebenen horizontalen Abständen zu dem Kanal 20 befinden sich Versorgungszuleitungen, nämlich zumindest eine Gasleitung 22 und eine Wasserleitung 24. Werden einzelne dieser Leitungen zum Sanierungsfall wird üblicherweise die Straßendecke 10 über der entsprechenden Rohrleitung aufgerissen und die entsprechende Rohleitung durch einen Aushub freigelegt. So entsteht gegebenenfalls sogar nach ein einander eine Baugrube 26 über dem Kanal 20, eine Baugrube 28 über der Gasleitung 22 und eine Baugrube 30 über der Wasserleitung 24. Je nach dem Verlauf dieser Rohrleitungen unter der Strassendecke 10 muss die Straße entweder teilweise oder ganz für den Verkehr gesperrt werden. Deshalb werden manchmal Sanierungsarbeiten an mehreren Leitungen gleichzeitig vorgenommen, wenn eine totale Sperrung der Straße für den Verkehr unumgänglich ist.

Wenn eine solche Generalsanierung, das heißt ein Ausbau und eine Erneuerung der Hauptleitungen und Hausanschlussleitungen sowie die Stromversorgungs- und Telekomkabel erfolgen soll, stellt sich die Aufgabe, für eine langfristige Lösung zu sorgen. Sanierungsbedürftig sind zu einem solchen Zeitpunkt auch oft der Gehweg 14 und die Pflasterzeilen sowie Hochborde. Der Fahrbahnbelag und dessen Unterbau 16 sind zumeist noch verhältnismäßig gut erhalten und müssten natürlich bei Auswechslung der Leitungen unter der Fahrbahn ebenfalls gesamtheitlich erneuert werden, wodurch hohe Kosten entstehen, gegen die sich die Bürger wegen der Kostenbeteiligung der Anlieger zu Recht wehren.

Ein Ziel der Erfindung ist es diese Kosten zu senken. Ferner soll eine Sperrung der sanierungsbedürftigen Straße vermieden und schließlich soll die Bauzeit für die Sanierungsmaßnahmen erheblich gekürzt werden, wogegen für zukünftige Revisions- Erneuerungsarbeiten und auch für spätere zusätzliche Anschlüsse alle Vorbereitungen so getroffen werden, dass später weder eine Straßensperre noch große Kosten erforderlich werden.

Die Lösung dieser Aufgabe lässt sich beispielhaft an Hand der Figur 2 erläutern.

Zunächst braucht die Strassendecke 12 nicht aufgerissen zu werden. Der Unterbau 16 kann bleiben. Stattdessen werden alle Leitungen neu übereinander und zwar nur unterhalb eines der beidseitigen Gehwege 14 verlegt. Die Baugrube befindet während der Sanierungsarbeiten mithin nur auf einer Straßenseite und nicht im Bereich des Straßenverkehrs sondern eng begrenzt im Bereich nur eines Gehweges 14. Der Straßenverkehr wird dadurch gar nicht oder nur wenig behindert. Fußgänger benutzen in der Bauzeit den gegenüberliegenden Gehweg.

Ein bestehender Mischwasserkanal 20 kann stillgelegt oder als Regenwasserkanal 20a für die Grundstücksentwässerung belassen werden. Auch das Wasserrohr 24 wird stillgelegt oder, wenn es noch hierfür geeignet ist, kann das Wasserrohr 24 als Feuerlöschwasserzuleitung 24a an Ort und Stelle verbleiben. Die Gasleitung 22 wird stillgelegt.

Unter dem Gehweg 12 wird ein neuer Schmutzwasserkanal 32 in einem System verlegt, bei dem unter dem Gehweg 14 überall dort, wo es sich sinnvoller Weise anbietet, der Schmutzwasserkanal 32 unten durch einen von oben zugänglichen Schacht 34 beispielsweise gemäß der eigenen Deutscher Patentanmeldung 100 23 399, geführt. Hierbei kann es sich um ein Misch- oder um ein Trennsystem mit einem oder zwei Rohren handeln. Die Anordnung dieser Schächte 34 erfolgt in Abständen zueinander, zumeist dorthin wo seitliche Abzweigungen beispielsweise an eine Hausanschlussleitung oder, wie in Figur 2 beispielhaft dargestellt, ein Straßenabwässerabfluss 36 von einem Gully 38 zuzuleiten ist. Die Schächte 34 sind oben vom Gehweg 14 durch eine Abdeckung 40 zugänglich und dienen späteren Ergänzungs- oder Revisionsarbeiten. Denn im Systemgraben zwischen den Schächten 34 werden auch neue Wasserversorgungsleitungen 42 und Gasversorgungsleitungen 44 sowie die Kabel 46 der Telekommunikation und Stromversorgung verlegt und durch die Schächte 34 derart geführt, dass alle Abzweigungen im Schacht erfolgen können. Alle Abzweigungen von diesen Zu- und Ableitungen in die Gebäude zu beiden Seiten der Strasse gehen systemgerecht von einem Schacht 34 aus. Die Durchquerung zur anderen Straßenseite kann mit einem modernen Horizontalbohrsystem durchgeführt werden, so dass auch für diese Anschlüsse auch nicht die Strassendecke aufgerissen zu werden braucht. Diese Horizontalquerung wird zweckmäßigerweise aus dem Aushub für einen neuen Schacht 34 hergestellt, bevor der Schacht in den Aushub eingesetzt wird. Die Horizontalquerung wird mit einem genügend bemessenen Leerrohr ausgefüttert und nimmt hierin von einander getrennt alle Zu- und Ableitungen auf.

Die beidseitigen Hochborde und Pflasterzeilen 18 werden neu hergestellt. Das Dachprofil 50 der weiter bestehenden Straße wird hier im in Figur 2 dargestellten Beispiel für ein einseitiges Gefälle nach links ausgeglichen, damit eine Einseitigkeit gewahrt bleiben kann und die Fahrbahn mit einer Asphaltdeckschicht erneuert. Mehr ist für eine Sanierung nicht erforderlich.

Gegenüber einer herkömmlichen Sanierung, bei der eigentlich nur der alte Zustand durch Austauschen der alten durch neue Rohre im Grunde nicht verändert wird, ergeben sich schon bei der Sanierung erhebliche Kostenersparnisse. Insbesondere werden aber auch Folgekosten eingespart. Es ist errechnet worden, dass bei der Sanierung eines Straßenabschnittes mit sechs Wohnhaus - Parzellen auf jeder einen Straßenseite gegenüber der herkömmlichen Sanierungsbauweise mit dem neuen Konzept ca. 100.000, 00 € einsparbar sind.

Durch die Vermeidung von neuen Längsgräben in der Fahrbahn und Wegfall aller Schieberkappen und die Revisionsmöglichkeit für alle Leitungen vom Gehweg 12 aus werden auch die Unterhaltskosten wesentlich reduziert. Schließlich werden die Unterhaltskosten auch dadurch reduziert, dass alle eventuell notwendigen Revisions- und Reinigungsarbeiten an allen Rohr- und Leitungssystemen von den zugänglichen Schächten 34 aus erfolgen können, was einerseits keine Verkehrsbeeinträchtigung bedeutet und zum anderen auf verhältnismäßig kurzen Abständen zwischen den Schächten 34 mit modernen Geräten es ermöglicht, selbst Schäden oder Verstopfungen sowohl an den Rohr- und Leitungssystemen selbst zu beheben als auch an deren Haus- und sonstigen Anschlüssen, da auch diese Anschlüsse in die Schächte 34 verlegt worden sind.

Um das Rohr- und Leitungssystem zwischen den Schächten 34 gegen Schäden beispielsweise durch Versetzungen oder mangelnde oder falsche Verdichtung zu bewahren und damit das ganze Ver- und Entsorgungssystem wartungsfreier zu machen, erfolgt gemäß einer Ausgestaltung der Erfindung das Auffüllen der unter dem Gehweg (14) übereinander verlegten Rohre und Leitungen durch Kalkerde. Die Einmischung von Kalk in den Füllsand verhindert sowohl beim Verdichten als auch bei späteren Belastungsänderungen Schäden an den Rohren und Leitungen.

## Patentansprüche

1. Verfahren zum Sanieren und Modernisieren einer üblichen Anlage von Versorgungs- und Entsorgungsleitungen unter einer horizontalen Straßendecke (10) mit einer befestigten Fahrbahn (12) und Gehwegen (14) zu beiden Seiten der Fahrbahn (12) mit einem Unterbau (16) sowie einem darunter verlegten Mischwasserkanal (20) und hierzu in vorgeschrieben seitlichen Abständen verlegte Leitungen für Wasser (24), Gas (22) und gegebenenfalls Strom, **gekennzeichnet durch** folgende Schritte:
a. Stilllegung aller unterhalb der Fahrbahn (12) befindlichen Rohre und Leitungen (20,22,24),
b. Anordnung neuer Leitungen unterhalb nur eines seitlichen Gehweges (14) übereinander mit einem oder zwei Abwasserkanalrohren (38) ganz unten, einem Wasserleitungsrohr (42) im Abstand darüber, einem Gasleitungsrohr (44) noch weiter oben und ganz oben von elektrischen Leitungen für Strom und Telekommunikation (46),
c. Durchführung aller Leitungen (32,42,44,46) **durch** mehrere unterhalb des Gehweges (14) in Abständen zueinander angeordnete und von oben **durch** eine Abdeckung (40) zugängliche Revisionsschächte (34), wobei die Abstände gemäß dem Bedarf an gebündelten Abzweigungen in oder von Querleitungen (36) zu den einzelnen Rohren und Leitungen (32,42,44,46) bestimmt werden und
d. Anpassen der Straßendecke (10) an ein leichtes Gefälle zu der Seite des Gehweges (14) hin, unter dem sich die neu verlegten Rohre und Leitungen(32,42,44,46) befinden.

2. Verfahren nach Anspruch 1, **dadurch gekennzeichnet, dass** die stillgelegten Rohre (20,24) bei weiterhin bestehender Brauchbarkeit als Hilfsleitungen benutzt werden.

3. Verfahren nach Anspruch 1, **dadurch gekennzeichnet, dass** die Auffüllung der unter dem Gehweg (14) übereinander verlegten Rohre und Leitungen durch Kalkerde erfolgt.

4. Verfahren nach Anspruch 1, **dadurch gekennzeichnet, dass** die Durchquerung zur anderen Straßenseite mit einem modernen Horizontalbohrsystem aus dem Aushub für einen Schacht (34) durchgeführt wird, in das ein Leerrohr in genügender Abmessung zur Aufnahme aller Zu- und Ableitungen aufgenommen wird.
